# EUROPEAN PATENT SPECIFICATION

(11) **EP 0 591 738 B1**
(45) Date of publication and mention of the grant of the patent: **05.02.1997**
(21) Application number: 93115021.3
(22) Date of filing: 17.09.1993
(51) Int. Cl.: D04H 1/42, D04H 1/56

(54) **Flame-resistant synthetic micro-fibre non-woven fabric and a method for its preparation**
Flammhemmender, synthetischer Vliesstoff aus Mikro-Fasern und Verfahren zu seiner Herstellung
Etoffe non-tissée résistante à la flamme de microfibres synthétiques et une méthode pour sa préparation

(30) Priority: 07.10.1992 IT MI922309
(43) Date of publication of application: 13.04.1994
(73) Proprietor: ALCANTARA S.p.A., I-20100 Milano (IT)
(72) Inventor: Borri, Carlo, I-50129 Firenze (IT); Piermattei, Alessandro, I-60041 Sassoferrato (AN) (IT); Serpe, Luigi, I-80059 Torre del Greco (NA) (IT)
(74) Representative: Cioni, Carlo

(56) References cited:
- EP-A- 0 469 354
- DE-U- 9 010 789
- GB-A- 2 152 542
- US-A- 3 531 368
- US-A- 4 981 945
- US-A- 5 114 981

## Description

The present invention relates to a flame-resistant non-woven fabric and a method for its preparation. Non-woven microfibre fabrics are known in the art e.g. of the type marketed by Alcantara S.p.A.; products of this type are further described in Italian patent nos. 823055, 839921, 858373, 873699, 905222, 921871 and in U.S. patents nos. US-A-3531368 e US-A-3889292. In numerous end applications, e.g. in furnishings, and in some Countries in almost all uses, the microfibre fabrics must stringent precise flame resistance requirements.

There are essentially two known methods for giving the microfibre fabrics the required flame-resistance characteristics. According to the first process, known as pad dyeing, the fabric undergoes impregnation in a bath containing flame-resistant additives and is dried successively. This process has the disadvantage of requiring a further step in the production process and of giving a suede finish whose hand characteristics and softness are not as good as non flame-resistant products. Further, the treatment is not permanent.

A second method, known as backside coating, involves the application of a paste containing flame-retarding compounds such as halogens, antimony and phosphorus, on one side, usually not the visible side, of the non-woven synthetic fabric. This method has the disadvantage of requiring a further step in the production process and of having a "harder" hand thus not as good draping characteristics as untreated products.

To solve these problems the polyurethane or polyester were treated with flame-retarding additives.

This was not a practical solution because the quantity of additives necessary to give the required flame-resistant properties was such as to weaken the structure of the polymer and render it useless in the production of non-woven microfibre fabric.

From EP-A-0469354 is known the preparation and the use of microfibre made of intrinsically flame resistant polymer. The object of the present invention is therefore to solve the problems listed above and to prepare a non-woven fabric microfibre with flame-resistant characteristics. This objective is achieved by the present invention which relates to a non-woven microfibre fabric, as specified in claim 1.

A further object of the invention is a method for the preparation of a synthetic non-woven micro-fibre fabric, as specified in claim 2.

According to the present invention, in addition to the microfibre matrix of flame-resistant polyester, a polyurethane polymer is used, containing flame-resistant additives of a type already known, such as, for instance oxides of antimony and decabromo diphenyl oxides, in reduced quantities so as not to weaken the required characteristics of the polymer. The quantity of additive added is between 5 and 14% by weight of the dry polyurethane and in the case of antimony oxides and the decabromo diphenyl oxide it is about 10%.

By intrinsically flame-resistant polyester here is meant a polyester copolymer which has in its chain a plurality of substitutes, in general containing halogens o phosphorous atoms, which impart flame-resistant properties to the final polymer. These types of polyester are known in the trade and are used to make molded products with flame-resistant characteristics.

An example of this type of copolymer, suitable to use in the present invention, is the product marketed by Enichem of Acerra under the proprietary name FIDION SR. In this copolymer the required flame resistance is obtained by inserting a glycol of the formula: 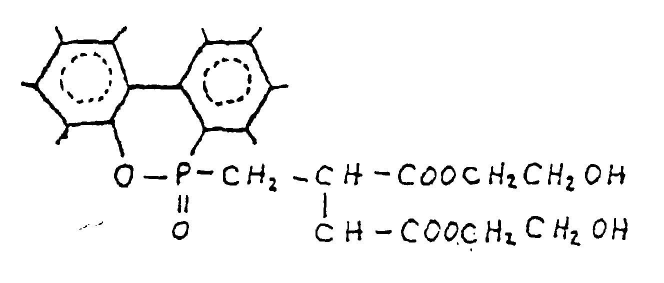 into the chain.

Another example of intrinsically flame-resistant polyester is that marketed by HOECHST under the name CHIPSPES RT17.

By polyurethane polymer here is meant a polyurethane-polyurea copolymer of type known in the art for this application.

Despite the chemico-physical characteristics of the flame-resistant polyesters mentioned above, which make them prima facie not suited to being used in the production of synthetic non-woven microfibre fabrics, they were surprisingly discovered to be so usable, and non-woven fabrics thus obtained show no appreciable differences, except for the flame-resistance property, from traditional products.

The intrinsically flame-resistant synthetic micro-fibre non-woven fabric according to the present invention is prepared according to a method which involves the application of a polyurethane elastomer to a microfibre base in flame-resistant polyethylene terephthalate. The PET has intrinsic viscosity of 0.64 ± 0.02.

In this method a staple fibre is formed initially from polyethylene terephthalate microfibre of from 0.01 to 0.40 denier, preferably, about 0.08-0.15 denier, in a sheath consisting of a polystyrene matrix or a styrene copolymer. In more detail said staple fibre has preferentially the following characteristics: denier from 1.4 to 10.0; preferably, 3.4 to a 4.0; length 40 to 60 and preferably of about 49-51 mm, crimps from 4 to 15 mm and, preferably, from 8 to 11; stretch ratio from 2/1 to 4/1. Further the staple fibre may contain 50-80 parts by weight of flame-resistant polyethylene terephthalate and 20-50 parts by weight of polystyrene or styrene copolymer matrix.

The polystyrene matrix has the following characteristics : relative viscosity (η) 1.78 ± 0.03; max. humidity 400 ppm; softening point 87°C; specific weight 1.05; apparent density 0.65; resting angle 32°. The use of a polystyrene matrix with the above listed characteristics greatly facilitates the preparation of the felt to be impregnated.

Using this staple fibre, a felt (raw) is prepared which is subjected to a needle-punching process to form a punched felt with density of about 0.15-0.30 g/cc. The punched felt is then immersed in an aqueous solution of polyvinyl alcohol, for instance a solution of 20% by weight and, following drying, is immersed in a chlorinated hydrocarbon such as trichloroethylene or perchloroethylene until the polystyrene sheath is dissolved.

The resulting product is dryed and constitutes the microfibre base of flame-resistant polyethylene terephthalate to which is applied the polyurethane elastomer to obtain the non-woven fabric.

According to the present invention said polyurethane elastomer is the product of the reaction between a diamino chain extender (1, 2, 3) defined below and a prepolymer with iso-cyanate termination obtained from an organic or inorganic di-iso-cyanate of the type described below (4, 5) and a mixture of polyether diol and polyester diol

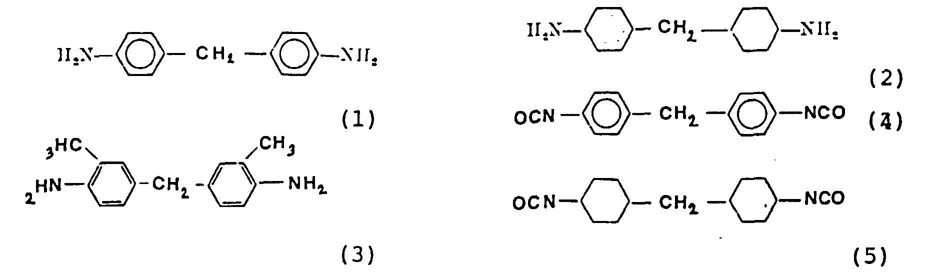

Alternatively, the prepolymer can be extended by reacting with water, as disclosed in Application no. MI92A001945 filed 6.8.1992 in the name of the present applicant.

Polyester diols suited able for this use have an average molecular weight of from about 800 to about 4000 and are conveniently selected from adipic polyethylene diol, adipic polybutlylene diol, adipic polyhexamethylene diol and polycaprolactone diol. Preferably polycaprolactone diol with average molecular weight in the order of 1900-2100 is used.

Suitable polyether diols have an average molecular weight of from about 800 to about 4000 and are conveniently selected from polyethylene oxide diol, polypropylene oxide diol, polytetramethylene oxide diol. Preferably polytetramethylene oxide diol with average molecular weight of 1900-2100 is used. In the mixture of the diols the ratio of polyether diol to polyester diol may generally vary from 1:9 to 9:1 with optimum values from 1:4 to 4:1.

According to the present invention the prepolymer isreacted with a diamine of the type 1, 2, 3 or with water to prepare polyurethane elastomer. The reaction is preferably carried out in an organic solvent such as N,N-dimethyl-formamide or in N,N-dimethyl-acetamide using an equimolar or almost equimolar, quantity of amine with respect to the diols used to form the prepolymer, working at a temperature of between from 30 to 80°C. Conveniently, the diamine solution in an organic solvent is gradually added to the solution of the prepolymer dissolved in the same organic solvent. The reaction may be carried out in the presence of an aliphatic monoamine, especially N-dibutyl-amine, in amounts of 5-100 moles per 100 moles of diamine. According to the present invention method, the flame-resistant microfibre substrate of polyethylene terephthalate previously obtained is impregnated by immersion in a solution of polyurethane elastomer, the impregnated substrate is squeezed by passing it through a pair of rollers and then coagulation takes place in water at a temperature of between 20 and 50°C. Thus a coagulated sheet is obtained which is treated in hot water (about 80°C) to extract the residue solvent and polyvinyl alcohol; then it is dried, cut into sheets of thickness of about 0.8-1.5 mm and the strips are abraded to raise the nap.

The raw synthetic microfibre non-woven fabric thus obtained is subjected to a dying process, dried and given a final finish. The synthetic micro-fibre non-woven fabric thus obtained has good general characteristics and compared to products of methods already known has improved flame-resistance characteristics. The invention will now be described in greater detail with reference to the examples following which are illustrative and not limiting.

### EXAMPLE 1

A staple fibre is formed from intrinsically flame-resistant terephthalate polyethylene microfibre (0,10-0,11 denier) in a polystyrene matrix having the following characteristics:
1. denier 3.8
2. length 51 mm
3. crimps 5/cm
4. drawing ratio 3.2:1

Namely, the fibre is formed by 57 parts by weight of polyethylene terephthalate of a known type (non flame-resistant), 40 parts by weight of polystyrene matrix and 3 parts by weight of polyethylene glycol. The polyethylene glycol is contained in the polystyrene matrix. A cross-section of the fibre reveals 16 polyethylene terephthalate microfibres embedded in the polystyrene matrix. From the staple fibre a raw felt is prepared which is subjected to needle punching to form a punched felt with density of 0.185 g/cc. The punched felt is immersed in a 20% by weight aqueous solution of polyvinyl alcohol and then successively immersed in trichloro-ethylene until the polystyrene matrix of the fibre is dissolved completely with consequent formation of an intermediate (the "base") composed of polyethylene terephthalate microfibre impregnated with polyvinyl alcohol.

The base thus formed is then dried. A solution of polyurethane elastomer in N,N-dimethyl-formamide is prepared apart. In the first stage (prepolymerization) diphenylmethane-4,4'-diiso-cyanate is reacted with a mixture of diols formed by polytetramethylene-oxide, with average molecular weight of 2026 and polycaprolactone diol with average molecular weight of 1992, with the formation of a prepolymer intermediate with iso-cyanate termination. Namely, in said first stage, the reaction is carried out for about three hours at a temperature of about 65°C, reacting a mole of diphenylmethane-4,4'-diiso-cyanate with 0.5 moles of a mixture of diols in which the ratio between polytetramethylenoxide diol and polycaprolactone diol is 3:1. The thus obtained prepolymer is dissolved in N,N-dimethyl-formamide to form a 25% by weight solution. A further 25% solution of N,N-dimethyl-formamide containing 4,4'-diamino-phenyl-methane and n-dibutylamine is prepared. This solution is added to the solution of the prepolymer in a time of 30 minutes, at a temperature of 40°C, thus forming a polyurethane elastomer in the form of a 25% by weight solution in N,N-dimethyl-formamide. The solution of polyurethane elastomer is diluted with N,N-dimethyl-formamide to form a 13% by weight solution. The non-woven fabric prepared as above disclosed is immersed in the solution of the polyurethane elastomer and the non-woven fabric thus impregnated is first wrung through a pair of rollers and then is immersed in a bath of water at 40°C for an hour.

Thus a coagulated sheet is obtained which is treated in hot water (about 80°C) to extract the residue solvent and polyvinyl alcohol; then it is dried, cut into sheets of 1mm thickness and the sheets are buffed to raise the nap. Thus a raw synthetic micro-fibre non-woven fabric of thickness 0.8 mm is produced which is dyed in a jet device with Venturi nozzles. For instance the synthetic micro-fibre non-woven fabric is made to pass through the nozzle for 1 hour at 120°C in an aqueous dye bath containing dispersed colourant DB81 in an amount of 2% by weight with respect to the raw synthetic micro-fibre non-woven fabric. At the end of the treatment a dyed imitation suede leather is obtained, which after drying and finishing, undergoes characterization. Namely the following characteristics are determined with regard to flame resistance:
1. RF1 test
2. F muss/302 test

### EXAMPLE 2

As Example 1; the only difference is the use of intrinsically flame-resistant polyethylene terephthalate of the type FIDION SR (Enichem - Acerra).

### EXAMPLE 3

As Example 2 up to the point of obtaining the flame-resistant polyethylene terephthalate microfibre. With regard to the preparation of the polyurethane elastomer dicyclohexylmethane-4,4'-diisocyante was used as iso-cyanate and dicyclohexilmethane-4,4'-diamino as chain extender. The other process steps are as in Example 1, and the characteristics of the micro-fibre non-woven fabric are shown in Table 1.

### EXAMPLE 4

As Example 2 up to the point of obtaining the flame-resistant polyethylene terephthalate microfibre. In the impregnation phase with polyurethane elastomer at 13% by weight in N,N-dimethyl-formamide, antimony oxide (Sb₂0₃) and decabromo diphenyl oxide were added in the quantity of about 10% of the dry weight of the polyurethane elastomer. The other steps were carried out as in Example 1, and the characteristics of the final product are shown in Table 1.

### EXAMPLE 5

As Example 4; the only difference is the quantity of antimony oxide and decabromo diphenyl oxide. Antimony oxide is 30% of the dry weight of the polyurethane elastomer and decabromo diphenyl oxide is 50% of the dry weight of the polyurethane elastomer. The flame-resistant characteristics of the final product are recited in Table I.

### EXAMPLE 6

As Example 1 up to the point of obtaining the flame-resistant polyethylene terephthalate microfibre. Antimony oxide and decabromo diphenyl oxide were added to the impregnation solution of the polyurethane elastomer of Example 2, both in the quantity of about 10% of the dry weight of the polyurethane elastomer. In this way the optimum softness and hand characteristics of the non additioned product were maintained. The flame-resistant characteristics of the final product are listed in Table I.

**TABLE 1**

| Example No. | 1 | 2 | 3 | 4 | 5 | 6 |
|---|---|---|---|---|---|---|
| METHOD RF 1 LEVELS | (*) | 2 | 2 | 1 | 1 | 2 |
| | | | | | | |
| METHOD F MUSS/302 COMBUSTION SPEED mm/min. | 150 | 95 | 98 | (-) | (-) | 90 |

| | | | | | | |
|---|---|---|---|---|---|---|
| (*) The sample burned completely | | | | | | |
| (-) The sample stopped burning as soon as the flame was removed. | | | | | | |

From the results shown above it is patent how the use of the flame-resistant microfibre alone (exs. 2 and 3) give results comparable to those given by the use of coating (ex. 6) without the problems which they give rise to (see Table 2) Furthermore, the combined use of microfibre according to the invention and the additives in reduced quantities (ex. 4) gives optimum results otherwise obtainable only by the addition of large quantities of coating with consequent loss of the characteristics of the non-woven fabric.

The problems generated by the addition of the coatings of flame-resistant additives are shown in the following Table 2, which reports the characteristics of the polyurethane without flame-resistant additives and with increasing quantities of coated additives. The additives used are antimony oxide (SbO₃) and decabromo diphenyl oxide (DDO). As shown, as the amount of additives added to polyurethane grows there is a drop in the physical-mechanical properties of the polyurethane which is negatively reflected in the characteristics of the non-woven fabric microfibre made from it.

**TABLE 2**

| PU CHARACTERISTICS | PU no additives | PU + Sb0₃ 10% DDO 10% | PU + Sb0₃ 20% DDO 50% |
|---|---|---|---|
| MODULE 100 Kg/cm2 | 38 | 30 | 15 |
| MODULE 300 Kg/cm2 | 78 | 60 | 35 |
| EXTENSION % | 830 | 940 | 1120 |
| TOUGHNESS Kg/cm2 | 420 | 350 | 210 |

## Claims

1. A microfibres non-woven fabric of the type comprising a plurality of polyester microfibres impregnated with a polyurethane polymer, at least part of said microfibres being made with an intrinsically flame-resistant polyester characterized in that said intrinsically flame-resistant polyester is a copolymer of polyethylene terephthalate, with a diol of the formula 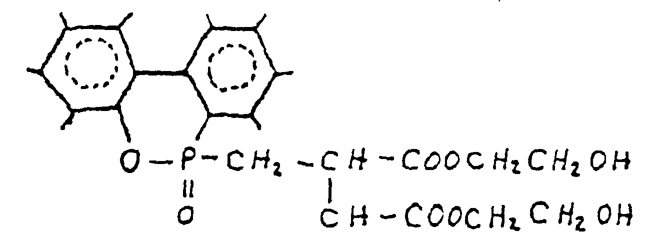 and that said polyurethane polymer further contains one or more flame retardant additives, selected from antimony oxides and decabromo diphenyloxide in an amount from 5 to 14% by weight of the dry polyurethane polymer.

2. A method for the preparation of a synthetic micro-fibre non-woven fabric according to claim 1, comprising the preparation of a microfibre base substrate and the impregnation of said substrate with a polyurethane polymer solution, in which at least part of said substrate is prepared from a plurality of intrinsically flame-resistant polyester microfibres characterized in that said substrate microfibre is prepared by co-extrusion of the said flame-resistant polyester with a polystyrene sheath or matrix obtained from styrene polymer or copolymer having the following characteristics: relative viscosity ( ) 1.79 ± 0,03; max. humidity 400 ppm; softening point 87°C; specific weight 1.05; apparent density 0,65; angle of rest 32°.

## Patentansprüche

1. Mikrofaservliesstoff der Art, umfassend eine Vielzahl von Polyestermikrofasern, die mit einem Urethanpolymer imprägniert sind, wobei mindestens ein Teil der Mikrofasern hergestellt worden ist mit einem inhärent flammfesten Polyester, dadurch gekennzeichnet, daß der inhärent flammfeste Polyester ein Copolymer von Polyethylenterephthalat ist mit einem Diol der Formel 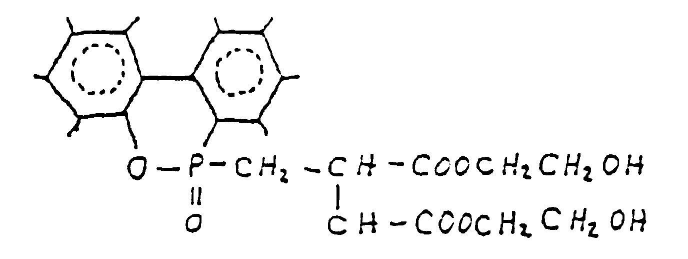 und daß das Polyurethanpolymer ferner ein oder mehrere flammverzögernde Additive enthält, ausgewählt aus Antimonoxiden und Decabromdiphenyloxid in einer Menge von 5 bis 14 Gew.-%, bezogen auf das trockene Polyurethanpolymer.

2. Verfahren zur Herstellung eines synthetischen Mikrofaservliesstoffs nach Anspruch 1, umfassend die Herstellung eines Mikrofasergrundsubstrats und anschließendes Imprägnieren des Substrats mit einer Polyurethanpolymerlösung, wobei mindestens ein Teil des Substrats hergestellt worden ist aus einer Vielzahl von inhärent flammfesten Polyestermikrofasern, dadurch gekennzeichnet, daß die Mikrofasern des Substrats hergestellt worden sind durch Coextrudieren des flammfesten Polyesters mit einer Polystyrolhülle oder -matrix, erhalten aus einem Styrolpolymer oder -copolymer mit den folgenden Eigenschaften: Relative Viskosität (η) 1,79 ± 0,03, maximale Feuchtigkeit 400 ppm, Erweichungspunkt 87°C, spezifisches Gewicht 1,05, scheinbare Dichte 0,65, Auflagewinkel (angle of rest) 32°.

## Revendications

1. Tissu non-tissé à base de microfibres du type comprenant une pluralité de microfibres polyester imprégnées avec un polymère polyuréthane, au moins une partie desdites microfibres étant réalisée avec un polyester présentant une résistance intrinsèque à la flamme, caractérisé en ce que ledit polyester présentant une résistance intrinsèque à la flamme est un copolymère de polyéthylène-téréphtalate, avec un diol de formule 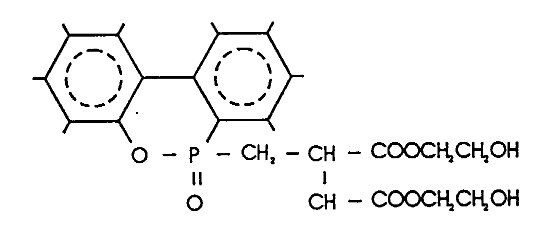 et en ce que ledit polymère polyuréthane contient par ailleurs un ou plusieurs additifs ignifuges choisis parmi les oxydes antimoniques et le decabromodiphényloxyde selon une quantité comprise entre 5 et 14 % en poids du polymère polyuréthane sec.

2. Procédé de préparation d'un tissu non-tissé à base de microfibres synthétiques selon la revendication 1 comprenant la préparation d'un substrat de base en microfibres et l'imprégnation dudit substrat avec une solution d'un polymère polyuréthane, dans lequel au moins une partie dudit substrat est préparée à partir d'une pluralité de microfibres polyester présentant une résistance intrinsèque à la flamme, caractérisé en ce que ladite microfibre de substrat est préparée par co-extrusion dudit polyester résistant à la flamme avec une gaine ou une matrice de polystyrène obtenue à partir du polymère ou du copolymère styrène ayant les caractéristiques suivantes : viscosité relative 1.79 ± 0,03 ; humidité maximale 400 ppm ; point de fusion 87° C ; poids spécifique 1.05 ; densité apparente 0,65 ; angle de repos 32°.
